# DEMANDE DE BREVET EUROPEEN

(11) **EP 1 488 953 A1**
(43) Date de publication de la demande: **22.12.2004**
(21) Numéro de dépôt: 04364039.0
(22) Date de dépôt: 26.05.2004
(51) Int. Cl.: B60P 1/48, B60P 1/64, B66C 1/28

(54) **Système de déchargement de marchandises d'une plateforme de stockage vers une plateforme de déchargement**

(30) Priorité: 16.06.2003 FR 0307206
(71) Demandeur: Beignon, Léon, 56700 Hennebont (FR)
(72) Inventeur: Beignon, Léon, 56700 Hennebont (FR)

(57) **Abrégé**

La présente invention se rapporte à un système de déchargement de marchandises conditionnées sous la forme d'unités sensiblement parallélépipédiques (M), d'une plateforme de stockage (1) vers une plateforme de déchargement (S).

Il se caractérise essentiellement par le fait que ladite plateforme de stockage (1) est équipée d'au moins une paire de bras parallèles et pivotants (2), à l'extrémité libre desquels est suspendu un panier (3) de réception d'au moins une unité (M), ce panier (3) étant à sommet (33) et à fond (34) ouverts et présentant une paire de parois latérales (30) opposées l'une à l'autre formant griffes de retenue de l'unité (M), ces parois (30) comportant, dans leur partie inférieure, des moyens (31) d'écartement l'une de l'autre, de sorte qu'elles sont susceptibles d'occuper sélectivement une première position de retenue de ladite unité (M) et une seconde position de libération de ladite unité (M), par le fond (34) du panier (3).

## Description

La présente invention concerne un système de déchargement de marchandises conditionnées sous la forme d'unités sensiblement parallélépipédiques, d'une plateforme de stockage vers une plateforme de déchargement.

Dans le domaine du transport de marchandises, que ce soit par des moyens routiers, ferroviaires ou fluviaux, se pose de manière courante le problème de leur déchargement lorsque le véhicule est arrivé à destination.

Ainsi, il est très répandu de transporter des marchandises sous la forme d'unités sensiblement parallélépipédiques, et plus particulièrement sur des palettes en bois ou en matière plastique.

Par l'expression "unités sensiblement parallélépipédiques", on entend aussi bien un parallélépipède proprement dit qu'une unité dont la base a un contour carré ou rectangle, et dont le volume s'inscrit dans un parallélépipède.

Lorsqu'il s'agit d'un transport par un véhicule routier tel qu'un camion, de telles unités sont placées sur le plateau attelé au véhicule tracteur, par exemple au moyen d'un chariot élévateur motorisé.

Une fois que le camion est arrivé sur son lieu de livraison, il est alors nécessaire de décharger du plateau les unités qui y ont été stockées.

Cela se fait par exemple en manoeuvrant le camion de telle manière que le plateau occupe une position contiguë à celle d'un quai de déchargement. Le conducteur du camion procède alors au déchargement lui-même en employant un chariot mis à sa disposition, ou attend qu'un opérateur de l'entreprise destinataire soit disponible pour ce faire. Mais dans la première situation, encore faut-il que le quai soit libre d'accès.

Une autre possibilité consiste à décharger les unités du camion pour les stocker sur le sol, à proximité de celui-ci. Là encore, cela nécessite qu'un opérateur soit disponible ou que du matériel soit mis à la disposition du conducteur.

On se trouve donc confronté à des situations dans lesquelles le conducteur du véhicule va devoir patienter parfois longuement avant que son camion ne soit déchargé, situations incompatibles avec les objectifs de compétitivité et de rendement auxquels il est tenu.

La présente invention a pour but de proposer un système de déchargement de marchandises conditionnées sous la forme d'unités sensiblement parallélépipédiques, d'une plateforme de stockage vers une plateforme de déchargement, qui permet au conducteur de décharger sa marchandise lui-même, sans avoir à attendre une intervention extérieure.

Elle a également pour but de fournir un système de structure et de fonctionnement simple, dont le maniement ne nécessite pas de compétences particulières.

Ce système de déchargement se caractérise essentiellement par le fait que ladite plateforme de stockage est équipée d'au moins une paire de bras parallèles et pivotants, à l'extrémité libre desquels est suspendu un panier de réception d'au moins une unité, ce panier étant à sommet et à fond ouverts et présentant une paire de parois latérales opposées l'une à l'autre formant griffes de retenue de l'unité, ces parois comportant, dans leur partie inférieure, des moyens d'écartement l'une de l'autre, de sorte qu'elles sont susceptibles d'occuper sélectivement une première position de retenue de ladite unité et une seconde position de libération de ladite unité, par le fond du panier.

Grâce à ce système, le conducteur du véhicule va pouvoir manier lui-même le panier de réception d'unités de manière à pouvoir décharger la plateforme.

Il n'a donc pas besoin d'une intervention extérieure qui lui occasionnerait inévitablement une perte de temps.

Par l'expression "griffes de retenue de l'unité", on entend que les parois latérales sont aptes à retenir l'unité aussi bien latéralement, en direction horizontale, que verticalement.

Par ailleurs, selon d'autres caractéristiques avantageuses mais non limitatives de ce système :
- les bras sont télescopiques ;
- il comporte au moins trois bras parallèles et pivotants, chaque bras intermédiaire, c'est-à-dire encadré par deux autres bras, constituant un même moyen de suspension pour deux paniers voisins ;
- l'extrémité inférieure des parois latérales se prolonge transversalement par un moyen de retenue en direction verticale de ladite unité tel qu'une cornière ou un profilé ;
- les parois latérales sont à claire-voie ;
- les moyens d'écartement des parois consistent en des vérins ;
- les moyens consistent en des vérins à deux tiges opposées l'un à l'autre ;
- les parois comportent des moyens additionnels d'écartement dans leur partie supérieure, de façon à autoriser le retrait du panier par un mouvement de bas en haut, le long de ladite unité ;
- la plateforme de stockage est un plateau de véhicule, notamment d'un camion.

D'autres caractéristiques et avantages de la présente invention apparaîtront à la lecture de la description détaillée qui va suivre d'un exemple de réalisation spécifique.

Cette description sera faite en référence aux dessins annexés dans lesquels :
- la figure 1 est une vue schématique de dessus du plateau d'un véhicule routier tel qu'un camion, ce plateau étant équipé d'un système conforme à l'invention ;
- la figure 2 est une vue analogue à celle de la figure 1, le système étant cependant représenté dans une position différente de déchargement ;
- la figure 3 est une vue en bout du plateau et du système, dans une position analogue à celle de la figure 1 ;
- la figure 4 est une vue partielle du dessus d'un panier qui compose ledit système de déchargement ;
- les figures 5 et 6 sont des vues partielles du système dans des positions dans lesquelles le panier passe d'une position intermédiaire de suspension à une position finale d'appui au sol ;
- les figures 7 à 9 sont des vues d'un panier et d'une unité de stockage associés représentés dans trois positions permettant finalement de libérer ladite unité.

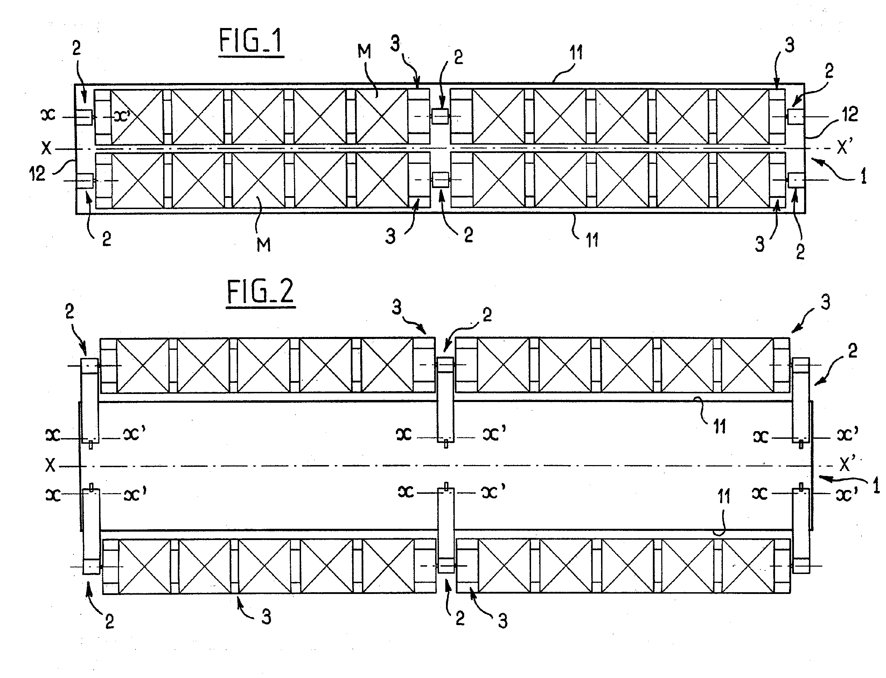

Le système de déchargement ici décrit est intégré à une plateforme de stockage qui est constituée par le plateau 1 d'un véhicule routier tel qu'un camion. Le tracteur (non représenté) est par exemple situé sur la partie droite de la figure 1, dans le prolongement du plateau.

Dans une forme de réalisation non représentée, cette plateforme pourrait être constituée par le plateau de stockage d'un wagon à claire-voie ou encore par la cale d'une péniche ou d'un autre navire marchand.

Le plateau 1 représenté sur les figures a, vu de dessus, la forme d'un rectangle allongé avec des côtés longitudinaux parallèles 11 et transversaux 12. Il est équipé de roues d'appui au sol référencées 10.

On a référencé X-X' l'axe longitudinal médian du plateau, qui correspond à la direction générale de déplacement du véhicule.

Le système de déchargement conforme à l'invention comporte un ensemble de bras parallèles et pivotants 2, montés sur ce plateau.

Dans l'exemple représenté ici, on a affaire à six bras 2 répartis symétriquement de part et d'autre de l'axe médian longitudinal X-X', disposés par paire l'un en face de l'autre, à proximité des extrémités longitudinales dudit plateau, ainsi que dans une position médiane intermédiaire.

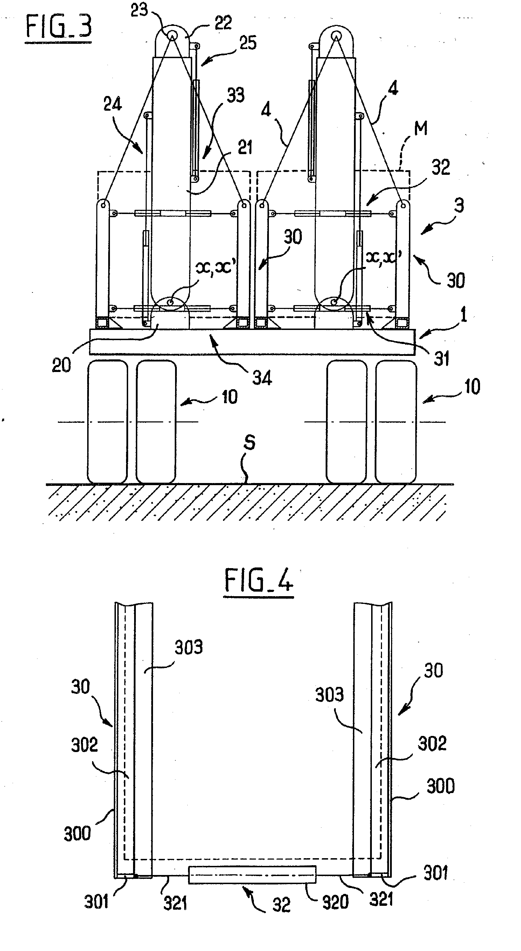

Ainsi que cela est particulièrement visible, notamment à la figure 3, chaque bras 2 comporte une embase en forme de chape 20 fixée au plateau 1, sur laquelle est articulé un dispositif à éléments coulissants et télescopiques inférieur 21 et supérieur 22.

L'articulation de chacun des bras par rapport à l'embase 20 se fait autour d'un axe x-x' parallèle à l'axe X-X' précité.

L'élément inférieur 21 est équipé d'un vérin à double effet 24 dont le corps est articulé sur l'embase 20 et la tige sur le côté dudit élément. Sa fonction est de commander le pivotement de cet élément 21 par rapport à l'embase. Le corps d'un second vérin 25 à double effet est également monté sur le côté opposé de l'élément inférieur 21, tandis que sa tige est articulée sur l'élément coulissant supérieur 22. Sa fonction est de commander le coulissement de cet élément supérieur par rapport à l'élément inférieur.

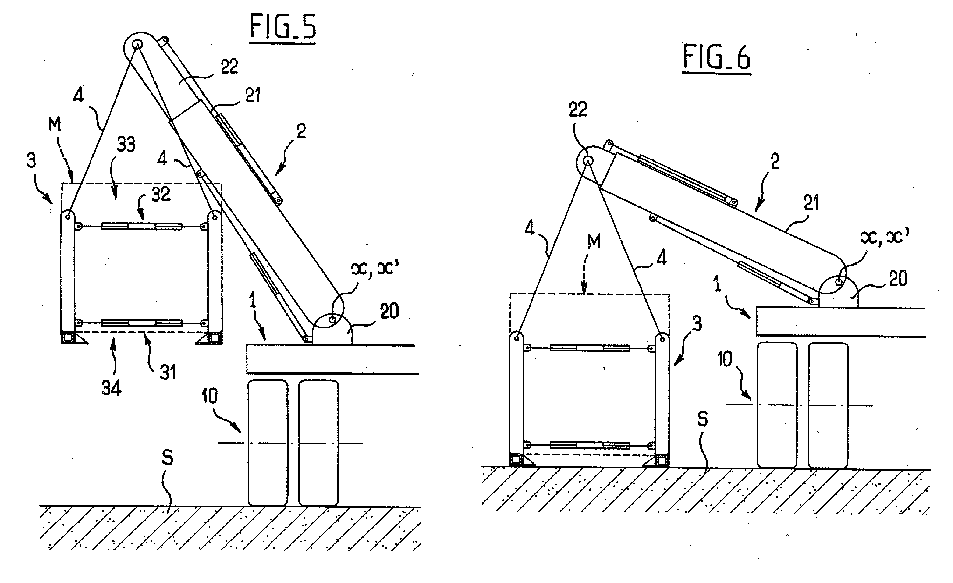

Ainsi, les bras 2 sont susceptibles d'occuper une position verticale illustrée à la figure 3, ainsi qu'une multitude de positions différentes dans laquelle ils forment un angle avec la verticale, notamment les positions des figures 5 et 6.

Au sommet de l'élément d'extrémité 22 est prévu un élément d'accrochage et de retenue 23 d'une paire de câbles de longueur fixe 4.

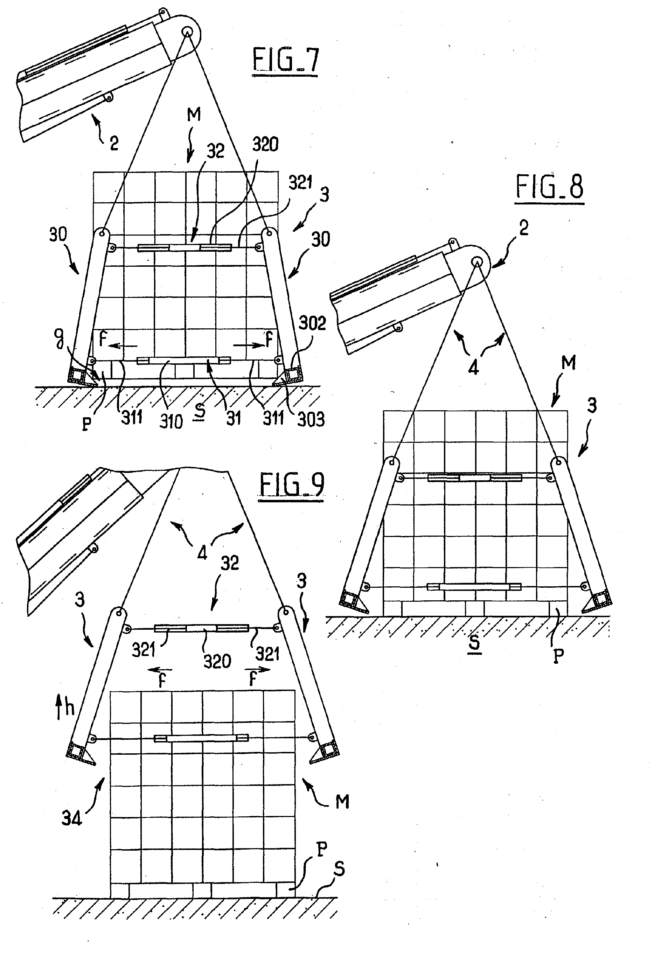

Le système de l'invention comporte également un panier 3 de réception d'au moins une unité de stockage **M**. Le contour d'une telle unité a été représenté en traits interrompus aux figures 3, 5 et 6 et en traits forts aux figures 7 à 9, en appui sur une palette **P**. Il s'agit bien entendu d'une forme de réalisation possible, l'unité pouvant avoir une hauteur plus importante.

Dans le cas présenté ici, on a affaire, de part et d'autre de l'axe X-X' du plateau 1, à deux paniers 3 disposés entre chaque paire de bras 2. En d'autres termes, chaque bras intermédiaire qui est encadré, c'est-à-dire disposé entre deux autres bras, est commun à deux paniers 3.

Chaque panier a une structure identique. Ce panier, de préférence métallique, est à sommet 33 et à fond 34 ouverts et présente une paire de parois latérales et longitudinales opposées l'une à l'autre 30, qui forment des griffes de retenue.

Plus précisément et en se reportant notamment aux figures 3 et 4, on constate que les parois latérales 30 sont constituées de longerons 300 disposés horizontalement et parallèlement les uns aux autres, dont les extrémités sont solidarisées à des poteaux d'angle 301 au sommet desquels sont fixés les câbles 4 précités. Au moins les longerons supérieurs sont prévus amovibles, de manière à autoriser le chargement du panier. A l'extrémité inférieure des poteaux d'angle est solidarisé un tube de section carré longitudinal 302 qui se poursuit vers l'intérieur du panier, par une pièce 303 de section triangulaire formant chanfrein.

Les deux parois 30 sont l'image l'une de l'autre dans un miroir. Elles sont retenues l'une à l'autre, au voisinage de leurs extrémités supérieure et inférieure, par deux vérins 31 et 32 à double tige, d'axe horizontal, ces tiges, respectivement référencées 311 et 321, étant articulées sur les poteaux 301 précités.

On a donc affaire à une structure à claire-voie, sensiblement parallélépipédique, dont le sommet 33 et le fond 34 sont ouverts.

Bien entendu, des moyens non représentés permettent d'actionner les vérins 24 et 25 de manière à faire basculer les éléments 21 et 22 autour de l'axe x-x' et provoquer leur coulissement mutuel. Des moyens additionnels permettent de piloter les vérins à double tige 31 et 32, de manière à provoquer le déploiement, respectivement la rétraction de ces tiges.

Ces moyens de type connu, peuvent être prévus pour être pilotés par le conducteur du camion lui-même, par exemple depuis un poste situé à proximité de la cabine du véhicule.

A la figure 3 est représenté en traits interrompus, le contour des unités de stockage de marchandises référencées **M**.

La mise en place de ces unités dans les paniers 3 se fait par exemple au moyen d'un chariot élévateur motorisé qui s'approche au plus près de l'un ou l'autre des côtés longitudinaux 11 du plateau, les longerons 300, côté chargement, ayant été préalablement démontés.

Dans le cas représenté ici (figures 1 et 2), chacun des quatre paniers 3 reçoit cinq unités M. Bien entendu, dans d'autres formes de réalisations non représentées, ce nombre pourrait être différent.

Lorsqu'elles sont mises en place dans les paniers, les unités M reposent sur les tubes 302 qui constituent pour elles un moyen de retenue en direction verticale.

Les figures 5 et 6 représentent respectivement les positions successives qu'occupent des bras 2 et des paniers 3 associés, de manière à pouvoir faire reposer ces derniers sur le sol **S**, en vue du déchargement des unités.

On se reportera maintenant aux figures 7 à 9 pour expliquer comment on procède au déchargement des unités **M**, lorsque la position de la figure 6 a été atteinte.

On a vu précédemment que les parois 30 constituent des griffes de retenue de ces unités.

Pour les libérer de ces griffes, on actionne les vérins inférieurs 31 et supérieurs 32 qui équipent les parois 30, de manière à provoquer l'extension des tiges 311 dans le sens des flèches **f** de la figure 7, et simultanément la rétraction des tiges 321.

Cette manoeuvre d'écartement des parois de leur partie inférieure provoque un glissement de la palette **P** sur laquelle sont stockées les marchandises, dans le sens de la flèche **g**, du tube 302 vers la pièce chanfreinée 303.

En continuant cette manoeuvre, on peut alors libérer complètement l'unité **M** des parois 30, ce qui correspond à la position de la figure 8.

Pour libérer le panier 3 des unités **M** correspondantes, il suffit alors de provoquer une extension des tiges 321 des vérins supérieurs 32 de manière à ce que l'écartement entre les extrémités supérieures des parois 30 soit plus important que la largeur des unités **M**. On peut alors faire glisser l'ensemble du panier 3 selon un mouvement vertical ascendant **h** tel que représenté à la figure 9.

Lorsque la totalité des unités de stockage a été ainsi déposée au sol, il suffit au conducteur de ramener les vérins 31 et 32 dans leur position initiale et les bras 2 en position verticale au-dessus du plateau 1 pour revenir à une situation sensiblement identique à celle de la figure 1.

Il peut alors reprendre la route, tandis que les unités **M** déposées au sol S sont en place pour être ultérieurement déplacées par un opérateur.

## Revendications

1. Système de déchargement de marchandises conditionnées sous la forme d'unités sensiblement parallélépipédiques (M) d'une plateforme de stockage (1) vers une plateforme de déchargement (S), **caractérisé par le fait que** ladite plateforme de stockage (1) est équipée d'au moins une paire de bras parallèles et pivotants (2), à l'extrémité libre desquels est suspendu un panier (3) de réception d'au moins une unité (M), ce panier (3) étant à sommet (33) et à fond (34) ouverts et présentant une paire de parois latérales (30) opposées l'une à l'autre formant griffes de retenue de l'unité (M), ces parois (30) comportant, dans leur partie inférieure, des moyens (31) d'écartement l'une de l'autre, de sorte qu'elles sont susceptibles d'occuper sélectivement une première position de retenue de ladite unité (M) et une seconde position de libération de ladite unité (M), par le fond (34) du panier (3).

2. Système selon la revendication 1, **caractérisé par le fait que** lesdits bras (2) sont télescopiques.

3. Système selon l'une des revendications 1 ou 2, **caractérisé par le fait qu'**il comporte au moins trois bras parallèles et pivotants (2), chaque bras intermédiaire, c'est-à-dire encadré par deux autres bras, constituant un même moyen de suspension pour deux paniers voisins (3).

4. Système selon l'une des revendications 1 à 3, **caractérisé par le fait que** l'extrémité inférieure desdites parois latérales (30) se prolonge transversalement par un moyen de retenue en direction verticale de ladite unité (M), tel qu'une cornière ou un profilé (302).

5. Système selon l'une des revendications 1 à 4, **caractérisé par le fait que** lesdites parois (30) latérales sont à claire-voie.

6. Système selon l'une des revendications 1 à 5, **caractérisé par le fait que** lesdits moyens d'écartement (31) des parois (30) consistent en des vérins.

7. Système selon l'une des revendications 1 à 6, **caractérisé par le fait que** lesdits moyens consistent en des vérins (31) à deux tiges (321) opposées l'un à l'autre.

8. Système selon l'une des revendications 1 à 7, **caractérisé par le fait que** lesdites parois (30) comportent des moyens additionnels (32) d'écartement dans leur partie supérieure, de façon à autoriser le retrait du panier (3) par un mouvement de bas en haut, le long de ladite unité (M).

9. Système selon l'une des revendications 1 à 8, **caractérisé par le fait que** ladite plateforme de stockage (1) est un plateau de véhicule, notamment d'un camion.
